# EUROPÄISCHE PATENTSCHRIFT

(11) **EP 1 072 356 B1**
(45) Veröffentlichungstag und Bekanntmachung des Hinweises auf die Patenterteilung: **15.06.2005**
(21) Anmeldenummer: 00115976.3
(22) Anmeldetag: 26.07.2000
(51) Int. Cl.: B23Q 11/10, B23Q 1/00, B23B 31/02

(54) **Zuführung für Medien an ein Werkzeug**
Supplying of medium to a tool
Alimentation des fluides à un outil

(30) Priorität: 30.07.1999 DE 19935960
(43) Veröffentlichungstag der Anmeldung: 31.01.2001
(73) Patentinhaber: BIELOMATIK LEUZE GmbH + Co., D-72639 Neuffen (DE)
(72) Erfinder: Neumann, Gunther, 72622 Raidwangen (DE)
(74) Vertreter: Patentanwälte Ruff, Wilhelm, Beier, Dauster & Partner

(56) Entgegenhaltungen:
- EP-A- 0 479 585
- DE-A- 3 814 565
- DE-A- 19 618 540
- DE-A- 19 632 472
- DE-A- 19 725 343
- DE-A- 19 738 832
- US-A- 4 795 292
- PATENT ABSTRACTS OF JAPAN vol. 1998, no. 01, 30. Januar 1998 (1998-01-30) -& JP 09 239637 A (HOOKOSU KK), 16. September 1997 (1997-09-16)
- "TOOL HOLDER ADJUSTMENT SCREW WITH INTEGRAL FILTER AND SEAL" RESEARCH DISCLOSURE, KENNETH MASON PUBLICATIONS, HAMPSHIRE, GB, Nr. 386, 1. Juni 1996 (1996-06-01), Seite 386 XP000596183 ISSN: 0374-4353

## Beschreibung

Die Erfindung betrifft eine Zuführung, mit der Medien, wie Schmier- bzw. Kühlstoffe, in möglichst geringen Mengen an ein Werkzeug, z.B. dessen Arbeits- oder Schneideingriff in ein Werkstück, zugeführt werden können. Minimalschmierungen sind ggf. dadurch zu erreichen, daß das Medium stromaufwärts der Verbindung zwischen Werkzeug bzw. Futter und Arbeitsspindel pulsend zugeführt wird. Z.B. mit einer Frequenz von 0,2 bis 2 Sekunden und mit einer Medienmenge von 3 bis 10 mm³ je Puls. Danach soll am Medienauslaß die Frequenz so geglättet sein, daß ein kontinuierlicher Medienstrom austritt.

Das Medium kann den Medienauslaß als Aerosol oder als Kriechfilm erreichen. Dann sollen die am Medienauslaß freigegebenen Tröpfchen beim Auftreffen an den Schmierflächen haften und nicht abströmen. So können Verschmutzungen der anschließenden und weiteren Umgebung sowie das Entstehen von Schwebepartikeln in der Umgebungsluft vermieden werden. Die Tröpfchengröße soll außerdem nicht lungengängig, d.h. möglichst größer als 1 bis 4 µm, sein. Die Tröpfchengröße am Medienauslaß ist abhängig von Form, Verlauf und Länge der zum Medienauslaß führenden Kanalwege durch das Werkzeug bzw. dessen Futter und auch abhängig vom Volumen des Luftstromes. Gleiche Aufbereitungen des Mediums stromaufwärts des Medienauslasses führen bei unterschiedlichen Werkzeugen zu unterschiedlichen Tröpfchengrößen. Gesinterte Hartmetallbohrer arbeiten mit sehr hohen Drehzahlen von 15.000 bis 30.000 U.p.M.. So werden zur Herstellung einer Bohrung mit einer Länge des 5- bis 10fachen ihres Durchmessers nur Bruchteile einer Sekunde benötigt. Bewirkt dabei die vorwiegend pulsende Zuführung noch einen pulsenden Austritt aus dem Medienauslaß, so kann die Zerspanungsarbeit ein Intervall zwischen zwei Austrittsimpulsen einschließen und zu einer Mangelschmierung führen. Auch bei kontinuierlicher Zuführung können ähnliche Probleme auftreten.

Die JP 09-239637 A beschreibt eine Zuführung für Schmiermittelnebel zu einem Werkzeug gemäss dem Oberbegriff des Anspruchs 1. Der außerhalb der Werkzeugspindel erzeugte Schmiermitteinebel wird durch ein Rohr in der Spindel zugeführt und im Bereich der Spannvorrichtung für das Werkzeugfutter auf ein dünnes Innenrohr und einen darum liegenden Ringkanal verteilt, um danach in einer Düse wieder zusammengeführt zu werden. Dies geschieht in einer Kammer, die im Futter, relativ weit entfernt von dem Eintritt in das eigentliche Werkzeug, liegt.

Der Erfindung liegt die Aufgabe zugrunde, eine Zuführung für Medien zu schaffen, bei welcher Nachteile bekannter Ausbildungen bzw. der beschriebenen Art vermieden sind. Insbesondere soll die Zuführung an der auswechselbaren Werkzeugeinheit aus Futter und Werkzeug Steuermittel enthalten, welche die Tröpfchengröße am Medienauslaß unabhängig von der Ausbildung der Kanalwege an der Arbeitsspindel festlegen. Bereits vorhandene Werkzeuge sollen mit der erfindungsgemäßen Zuführung umrüstbar sein. Des weiteren sollte die Zuführung eine einfache Ausbildung und Handhabung ermöglichen. Z.B. soll die Werkzeugeinheit manuell oder vollautomatisch leicht an der Arbeitsspindel befestigt oder von dieser gelöst werden können. Das gleiche gilt auch für die Verbindung zwischen Futter und Werkzeug sowie für die Steuermittel. Die Erfindung ist im Anspruch 1 definiert.

Erfindungsgemäß sind die genannten Steuermittel an der Werkzeugeinheit, insbesondere am Futter vorgesehen. Das Futter könnte zwar einteilig mit dem Werkzeug ausgebildet sein, hat jedoch einen vom Werkzeug gesonderten Futterkörper, der als Steil- oder Hohlsteilkegel ausgebildet ist und eine Spanneinrichtung zur lösbaren Verbindung mit dem Schaft des Werkzeuges aufweist. Die Steuermittel, wie eine Leiteinrichtung für das Medium, umfassen eine Kanalisierung mit mindestens einem Kanal und sind über einen Endkanal an den Medienauslaß anzuschließen. Die Steuermittel weisen eine Düse mit einem Düsenauslaß auf, an welchem das Medium in feinen Tröpfchen ggf. in gepulsten Intervallen austritt. Danach erfolgt bis zum Medienauslaß eine wegabhängige Pulsdämpfung durch den Endkanal. Sind Länge und Querschnitte des Endkanales durch das Werkzeug o. dgl. vorgegeben, ist die Leiteinrichtung bzw. Düse so bemessen, daß nach der Pulsdämpfung am Medienauslaß das Medium in der gewünschten bzw. genannten Weise austritt. Bei verschiedenen Werkzeugen bzw. unterschiedlichen Endkanälen ist daher die Leit- bzw. Düseneinrichtung unterschiedlich ausgebildet und mit der Werkzeugeinheit auszuwechseln.

Die Düse ist eine Zerstäuberdüse, aus welcher das Medium vermischt mit einem Zweitmedium, wie Luft, in eine Expansionskammer austritt. In dieser Kammer wird daher die Tröpfchengröße nochmals reduziert, wonach der so gebildete Fluidstrom unmittelbar in den Endkanal geleitet wird. Dieser kann anschließend an das Futter und bis zum Medienauslaß einteilig begrenzt das Werkzeug durchsetzen, es als Bypass umgehen oder eine Wendel bilden. Bei jeder Ausbildung kann die Düsen- oder Expansionskammer teilweise oder vollständig auch vom Werkzeug unmittelbar begrenzt sein, d.h. im Werkzeug liegen.

Zweckmäßig sind zwei aufeinander folgende Düseneinrichtungen bzw. Zerstäuberstufen im axialen Abstand voneinander vorgesehen. So erfolgt eine erste Zerstäubung und unmittelbar darauffolgend eine zweite, feinere Zerstäubung. Die Düse der Vorzerstäubung und die sie umgebende Zufuhr für das Zweitmedium sind an der Arbeitsspindel vorgesehen. Die Vorkammer dieser Vorzerstäubung ist am Futter bzw. Werkzeugschaft befestigt und bildet ein axiales Steckglied zur Verbindung mit der Leiteinrichtung der Arbeitsspindel.

Alle vom Futter gesonderten, jedoch an diesem befestigten Bauteile der Leiteinrichtung liegen vollständig versenkt innerhalb des Futters. Sie sind daher vor Beschädigungen geschützt. Sie können aus Kunststoff oder Metall bestehen und sind quer zur Werkzeugachse federnd nachgiebig. So können Achsabweichungen zwischen ihnen und den Gegengliedern der Arbeitsspindel ausgeglichen werden. Außerdem sind Mittel vorgesehen, um in der Leiteinrichtung der Werkzeugeinheit Rückströmungen des Mediums zu verhindern bzw. um von der Arbeits- oder Drehbewegung des Werkzeuges eine Förderkraft in Strömungsrichtung zum Medienauslaß abzuleiten.

Die Steuermittel umfassen auch ein Justierglied zur Längseinstellung des Werkzeuges gegenüber dem Futter. Z.B. um Verkürzungen des Werkzeuges durch Nachschärfen so ausgleichen zu können, daß die Arbeitszone, wie die Schneiden, des Werkzeuges oder dessen vorderes Ende stets den gleichen Abstand vom Futter haben. So muß nach dem Nachschärfen die Werkzeugmaschine hinsichtlich des axialen Vorschubes nicht neu eingestellt werden. Diese Justiermittel begrenzen gleichzeitig die Kanalwege bzw. die Düsenkammer und bilden die Düse. Entsprechende Mittel sind aber auch dafür geeignet, einen Kanalkörper gegen das Werkzeug anzupressen. So sind dichte Übergänge bzw. definierte Durchlaßquerschnitte gewährleistet und das Entstehen von Blindkammern ist vermieden. Solche Blindkammern sind insbesondere dann nachteilig, wenn sie geeignet sind, Medium aufzunehmen, dann aber nicht mehr in Richtung zum Medienauslaß abzugeben, weil dadurch Unterbrechungen des Medienstromes auftreten können.

Ein Zweit- oder Drittmedien-Strom kann auch durch einen Fluidauslaß austreten, welcher gesondert vom Medienauslaß und benachbart zu diesem ist. Mit diesem Strom können Verunreinigungen, wie Späne, vom Arbeitsbereich des Werkzeuges weggefördert werden. Der Strom kann ein Zweigstrom des Luftstromes für die Zerstäuberdüse sein und bereits an dem Düseneinlaß oder Anschlußstück mit einem Bypass abgezweigt werden, welcher den Futterkörper durchsetzt und entlang des Außenumfanges des Werkzeugschaftes verläuft.

Diese und weitere Merkmale der Erfindung gehen auch aus der Beschreibung und den Zeichnungen hervor. Ausführungsbeispiele der Erfindung sind in den Zeichnungen dargestellt und werden im folgenden näher erläutert. In den Zeichnungen zeigen:
- Fig. 1: eine erfindungsgemäße Zuführung oder Einrichtung teilweise im Axialschnitt und mit unterschiedlichen Ausbildungen links und rechts der Mittelachse,
- Fig. 2 und 3: weitere Ausführungsbeispiele in Darstellungen entsprechend Fig. 1,
- Fig. 4: eine weitere Ausführungsform in schematischer Darstellung,
- Fig. 5: eine weitere Ausbildung entsprechend Fig. 1,
- Fig. 6: das Werkzeug gemäß Fig. 5 in Ansicht auf das Schaftende,
- Fig. 7: die Abdichtung gemäß Fig. 5 in Axialansicht,
- Fig. 8 u. 9: zwei weitere Ausbildungen entsprechend Fig. 5,
- Fig. 10: das Werkzeug gemäß Fig. 9 in Ansicht auf das hintere Schaftende,
- Fig. 11 u. 12: ein weiteres Ausführungsbeispiel in teilweise geschnittenen Ansichten, die rechtwinklig zueinander liegen,
- Fig. 13 u. 14: eine weitere Ausbildung entsprechend den Figuren 11 und 12,
- Fig. 15: eine weitere Ausbildung entsprechend Fig. 13,
- Fig. 16 u. 17: weitere Ausbildungen des Werkzeuges gemäß Fig. 15,
- Fig. 18 u. 19: eine weitere Ausbildung entsprechend den Figuren 13 und 14 und
- Fig. 20: den Kanalkörper gemäß Fig. 19 in Axialansicht.

Die Einrichtung 1 dient als Zuführung für ein Medium an eine Werkzeug-Einheit 2, die an einer Spindel 3, wie einer drehenden Arbeitsspindel einer Werkzeugmaschine, auswechselbar zu befestigen ist. Die Einheit 2 umfaßt ein Futter 4 und ein Werkzeug 5, das durchgehend einteilig ausgebildet ist. Eine Spanneinrichtung 6 dient zur Verspannung der Einheit 2 an der Spindel 3, welche als Betätigungsglied eine Spannbuchse 7 und für den Eingriff in das Futter 4 ein Zwischenglied, wie eine mittels der Buchse 7 radial aufweitbare Zange 8, trägt. Zum dichten Anschluß an die Einheit 2 hat die Spindel 3 im erweiterten Kopf der Buchse 7 eine Dichtung 9. Im wesentlichen alle Bauteile liegen in einer gemeinsamen Achse 10, die auch die Dreh- bzw. Vorschubachse für das Werkzeug 5 ist.

Das Futter 4 hat einen einteiligen Futterkörper 11 mit einem Verbindungsglied 12, wie einem Konus, am hinteren Ende, einem Flansch oder Eingriffsglied 13 zwischen seinen Enden und einem gegenüber diesen verjüngten vorderen Endabschnitt 14. Der Körper 11 ist vollständig von einer abgestuften Bohrung 15 durchsetzt, welche innerhalb der Abschnitte 12, 13 eine erweiterte Vertiefung 16 zur Aufnahme der Spindelteile 7, 8 bildet. Die Buchse 7 ist axial gegenüber der Zange 8 verfahrbar. Wird die Buchse 7 nach vorne bewegt, verengt sich die Zange und das Futter 4 kann nach vorne abgezogen werden. Umgekehrt wird das Futter 4 axial eingesetzt, dann die Buchse 7 nach hinten gespannt, wodurch die Zange 8 gespreizt und formschlüssig mit dem Innenumfang des Konus 12 in Eingriff gebracht wird. Dabei wird der Konus 12 mit seinem Außen-Steilkegel in einen komplementären Innenkonus des vorderen Spindelendes festsitzend hineingezogen. Bei automatischem Werkzeugwechsel greift ein Wechselautomat in die Vertiefung des Flansches 13 ein und nimmt die Einheit 2 von der Spindel 3 ab oder setzt sie auf. Der Kopf des Teiles 7 stößt den Konus 12 auch aus der Spindel aus, wenn er gegen den Boden der Senkung 16 angeschlagen wird.

Die Teile 4, 5 könnten zwar einteilig ausgebildet sein, jedoch ist das Werkzeug 5 mit einem Schaft 18 eng anliegend in die Bohrung 15 eingesetzt und mit seiner hinteren Endfläche 19 an einer Schulter des Futters 4 angeschlagen. Innerhalb dieser Bohrung ist der Schaft 18 reibungsschlüssig festgelegt, nämlich mit einem hydraulischen Spannglied 17 radial verspannt. Das Werkzeug 5 kann daher zerstörungsfrei ausgewechselt werden.

Die Zuführung 1 weist zur Förderung des Mediums und eines Zweitmediums bzw. Fluids eine Leiteinrichtung 20 mit einer Kanalisierung auf, die mit der Einheit 2 von der Spindel 3 abzunehmen und an eine entsprechende Leiteinrichtung in der Spindel 3 abgedichtet anzuschließen ist. Die Einrichtung 20 reicht nicht bis an das hintere Ende des Futters 2 und weist in der Achse 10 einen mehrfach abgestuften Kanal 21 auf, welcher in Endkanäle 22 im Werkzeug 5 mündet. Letztere münden am vorderen Ende des Werkzeuges 5 in dessen Arbeits- bzw. Schneidbereich am Umfang mit einem Medienauslaß 23. Das Medium strömt stets parallel zur Achse 10 in Strömungsrichtung 24 zum vorderen Werkzeugende. Die Kanäle 22 sind über ihre Länge und ihre Umfänge einteilig durch das Werkzeug 5 begrenzt.

Innerhalb des Flansches 13 bildet der Kanal 21 eine Düse 25, nämlich eine Zerstäuberdüse, deren Düsenkanal 26 am hinteren Ende und vor dem Spindelteil 7 einen Düseneinlaß 27 sowie am vorderen Ende einen Düsenauslaß 28 bildet, welcher vor dem Flansch 13 liegt. Der Kanal 26 hat einschließlich des Auslasses 28 über mehr als zwei Drittel seiner Länge durchgehend konstante Weite. Der Einlaßtrichter 27 ist entgegen Richtung 24 progressiv erweitert. Die Düse 25 ist durch einen vom Körper 11 gesonderten Düsenkörper 30 gebildet, der als Rohr in Richtung 24 frei in eine Düsenkammer 29 vorsteht. Die Kammer 29 hat eine Weite, die größer als die der einzigen Düsenöffnung 28 ist, während ihre Länge kleiner als die des Kanales 26 ist.

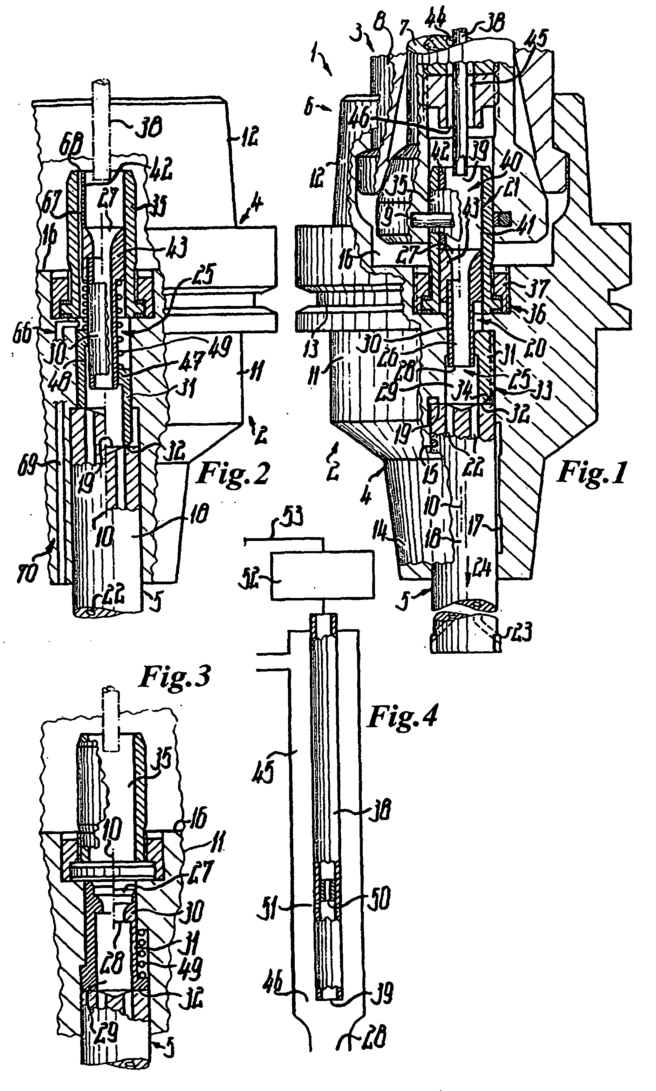

Die Kammer 29 wird am Innenumfang von einem hülsenförmigen Kanalkörper 31 begrenzt, der als Leitmantel bzw. Leitkörper für das Medium, als Anschlag für das hintere Schaftende 19 und als Übergangsstück zwischen den Körpern 18, 30 dient. Rechts in Fig. 1 ist der Körper 31 gesondert von den Körpern 11, 18, 30 entgegen Richtung 24 in die Bohrung 15 eingesetzt und hat gleiche Außenweite wie der Schaft 18, wobei sein vorderes Ende den Längsanschlag 32 bildet. Links in Fig. 1 ist der Kanalkörper einteilig mit dem Körper 11 ausgebildet. Der Körper 31 kann auch als Stellglied 33 axial verstellbar sein, damit der Axialabstand des Arbeitsendes des Werkzeuges 5 vom Konus 12 unabhängig von der Länge des Werkzeuges gleich gehalten werden kann. Zur Verstellung kann der Körper 31 in ein Innengewinde der Bohrung 15 eingreifen oder in Richtung 24 mit einer Feder belastet sein. Zwischen dem vorderen Ende des Körpers 31 und dem hinteren Ende 19 kann eine Dichtung 34 verspannt sein.

Innerhalb der Vertiefung 16 liegt ein hülsenförmiges Anschlußstück 35 der Einrichtung 20, das in die zentrale Bohrung des Spannkonus 7 eng anliegend einzustecken und am Außenumfang mit der Dichtung 9 abzudichten ist. Zwischen Dichtung 9 und Hülse 35 kann ein Gleitring aus Tetrafluorethylen oder einem Werkstoff mit ähnlichen Gleiteigenschaften verspannt sein, der zylindrisch ist. Die Hülse 35 ist mit einer Lagerung 36 beweglich sowie lösbar am Körper 11 gelagert und mit einem Lagerglied 37, wie einer Gewindehülse, gegen Lösen gesichert. Das vordere Ende der Hülse 35 weist einen äußeren Ringbund auf, an dessen beiden Stirnflächen Elastomer- oder Dichtringe verspannt anliegen, so daß das hintere Ende der Hülse 35 Radial- bzw. Taumelbewegungen gegenüber der Achse 10 ausführen und seine Lage an die zugehörige Spindelbohrung anpassen kann. Die Spannhülse 37 spannt die Dichtungen und den Bund gegen die Bodenfläche eines erweiterten Abschnittes der Bohrung 15, an dessen Innengewinde das Glied 37 mit einem Außengewinde entgegen Richtung 24 lösbar geführt ist.

Die an der Spindel 3 vorgesehene Leiteinrichtung weist einen zentralen Kanal, wie ein dünnes Rohr 38 auf, durch welches das Medium vom hinteren Ende der Spindel 3 der Einrichtung 20, nämlich in die Hülse 35, zugeführt wird. Das vordere Rohrende ist eine Abgabedüse 39 einer Vor-Zerstäubung 40, deren Düsen- oder Vorkammer 41 am Umfang von der Hülse 35 und am vorderen Ende vom Einlaß 37 begrenzt ist. Die Kammer 41 hat durchgehend konstante Weite, die größer als die Außenweite des Rohres 38 ist. Dadurch begrenzen die koaxialen Teile 35, 38 eine ringförmige Öffnung, in welche das Fluid, nämlich Luft, in die Kammer 41 eintreten kann. In das Anschlußstück 35 kann zur Begrenzung der Kammer 41 auch eine Hülse 42 auswechselbar eingesetzt sein, an welcher der Düsenkörper 30 oder eine Einlaßhülse 43 axial anschlägt, in die das Düsenrohr 30 eingesteckt ist. Rechts in Fig. 1 ist diese Hülse 43 einteilig mit dem Düsenrohr 30 ausgebildet. Die Hülse 43 kann in jedem Axialbereich des Anschlußstückes 35 gleich gut durch Radialpressung befestigt werden oder einteilig mit der Hülse 42 sein.

Die Spindel 3 weist um das Rohr 38 einen Ringkanal als Gasleitung 45 auf, deren Auslaß 46 mit Abstand hinter der Düse 39 liegt, welche ihrerseits aus der Ringöffnung 46 frei in die Hülse 35 vorsteht. Die Luftdüse 46 ist mit sowie relativ zum Rohr 38 axial mit einem Gewinde verstellbar und dafür am verjüngten Ende eines Schraubringes vorgesehen. Beide Düsen 39, 46 liegen weit hinter dem vorderen Ende der Buchse 7 und sind daher bei abgenommener Einheit 2 gut geschützt. Beim Aufsetzen der Einheit 2 auf die Spindel 3 werden die Düsen 39, 46 von der Einheit 2 nicht berührt.

Durch die Leitung 45 strömt in Richtung 24 kontinuierlich ein Luftstrom. Durch das Rohr 38 strömt gepulst Flüssigkeit, die an den Kanten der Düse 39 abreißt und vom ummantelnden Luftstrom in der Kammer 41 zerstäubt wird. Die Kammer 41 ist gegenüber ihrer konstanten Weite länger und schließt unmittelbar an den Einlaß 27 der Hülse 43 an. Die größte Weite des Einlasses 27 schließt ohne Absatz unmittelbar an den Innenumfang der Kammer 41 an. Der vorzerstäubte Medienstrom gelangt gepulst in den Kanal 26, welcher wesentlich enger als die Kammer 41 ist. Die Weite der Düse 28 ist mindestens 1,5-fach größer als die Weite der Düse 39. Die Kammer 29 hat eine größere Weite als der Kanalabschnitt 26, 28 und eine kleinere oder gleich große Weite wie die Kammer 41. In der Kammer 29 wird das Medium noch feiner zerstäubt und tritt dann unmittelbar in die Endkanäle 22 ein.

Damit an den Wandungen der Kanäle anhaftende Schmierstoffteilchen nicht gegen Richtung 24 wandern, ist eine Rückhaltestufe vorgesehen. Diese bildet um das vordere Ende des Rohres 30 einen Ringkanal, dessen Weite gleich groß wie die der Kammer 29 ist, während seine Länge veränderbar sein kann. Das hintere Ende des Leitmantels 31 schließt dicht an den Außenumfang des Rohres 30 mit einem drehschlüssigen Eingriff an, der durch polygonale Außen- und Innenumfänge der Teile 30, 31 gebildet ist und an das hintere Ende des Ringkanales anschließt. Der Innenumfang der Kammer 29 und des Ringkanales kann auch in Richtung 24 spitzwinklig konisch erweitert sein. Dadurch wird bei Rotation der Einheit 2 auf das Medium eine Förderkraft in Richtung 24 ausgeübt. Das Rohr 30 besteht aus Kunststoff bzw. ist elastisch.

Nach Beschleunigung des Medienstromes im Einlaß 27 und plötzlicher Expansion in der Kammer 29 hat der Medienstrom Pulsamplituden, die genau auf die Endkanäle 22 so abgestimmt sind, daß deren Pulsdämpfung spätestens am Auslaß 23 bzw. frühestens kurz davor einen pulsfreien Strom bewirkt, der kontinuierlich austritt.

Fig. 2 zeigt die Einheit 2 ohne Spindel sowie links der Achse 10 mit hinterster Stellung und rechts der Achse 10 mit vorderster Stellung der axial verschiebbaren Einheit aus Werkzeug 5 und Anschlag- bzw. Leitkörper 31. Der radial nach innen vorstehende Ringbund 47 des Körpers 31 umschließt das Rohr 30 axial verschiebbar, so daß der Rückhalteraum 48 bei axialer Vergrößerung der Kammer 29 in der Länge abnimmt. Eine Feder 49 umgibt das Rohr 30 und ist sowohl an der Buchse 43 als auch am Bund 47 permanent unter Spannung abgestützt, so daß die Anschlagfläche 32 stets dicht gegen das Ende 19 gepreßt wird.

Fig. 2 zeigt auch Leitmittel 70 für einen dritten Medienstrom, wie Luft. Dieser Strom wird über einen Bypass 66 von dem aus der Düse 46 austretenden Luftstrom abgezweigt und durch einen Kanal 67 zwischen den Umfängen der Teile 35, 42 und 43 in Richtung 24 in die Bohrung 15 gefördert. Der Eintritt 68 des Kanales 67 liegt in der gemeinsamen Endfläche der Teile 35, 42 unmittelbar der Düse 46 gegenüber. Zwischen den gegenüberliegenden Enden der Teile 31, 35 wird die Luft über einen Querkanal radial aus der Bohrung 15 heraus in einen Längskanal 69 geleitet, welcher unmittelbar benachbart zum Schaft 18 den Futterkörper 11 bis zu dessen vorderster Endfläche durchsetzt. Dort kann ein Rohr entsprechend Fig. 22 angefügt werden, das dann statt des Medienauslasses 23 gemäß Fig. 22 einen Fluidauslaß aufweist. Im Raum zwischen den Enden der Teile 31, 35 wird durch den Luftstrom ein Überdruck aufgebaut, welcher auf die Verbindung 47 zwischen den Teilen 30, 31 wirkt und einen Rückfluß des Mediums aus der Kammer 29 durch diese Verbindung sperrt. Zur Bildung der Kanäle 67 kann der Außenumfang der Teile 42, 43 polygonal, wie sechskantförmig sein. Dadurch entstehen mehrere über den Umfang gleichmäßig verteilte Einzelkanäle 67, welche von den ebenen Polygonalflächen und der gegenüberliegenden, zylindrischen Bohrung der Hülse 35 begrenzt sind.

Gemäß Fig. 3 ragt der Düsenkörper 30 nicht in das Anschlußstück 35 und schließt an dieses mit dem Einlaß 27 unmittelbar axial an. Der Abstand zwischen Einlaß 27 und Auslaß 28 ist gemäß den Figuren 1 und 2 mehrfach größer als die Weite des Einlasses 27 und in Fig. 3 etwa gleich groß wie diese Weite. Die Körper 30, 31 sind gemeinsam einteilig und rechts in Fig. 3 mit der Feder 39 axial verschiebbar, so daß sie auch vom Anschlußstück 35 Axialabstand haben können. Links in Fig. 3 ist dieser Körper 30, 31 entgegen Richtung 24 bis zum Anschlag am Anschlußstück 35 und einer Schulter des Körpers 11 festsitzend eingesetzt. Der Innenumfang der Düse 25 ist in Richtung 24 degressiv verjüngt.

Fig. 4 zeigt eine verengte Düse 50 und einen Querkanal 51, der das Rohr 38 durchsetzt und an die Leitung 45 anschließt. Bis zur Düse 50 kann das Rohr 38 stets mit Medium vollständig gefüllt sein. Bei einem Förderpuls durch das 2/2-Wegeventil bzw. die Dosierpumpe 52 wird das Medium an der Düse 50 unter Beimischung von Querluft durch den Kanal 51 zerstäubt und dann bis zu den Düsen 39, 46 gefördert, wo wesentlich mehr Luft zugeführt und nochmals feiner zerstäubt wird. Die Leitung 53 versorgt die Steuerung 52 mit Medium. Sofort nach der Düse 50 wird die Pulsamplitude bereits geglättet.

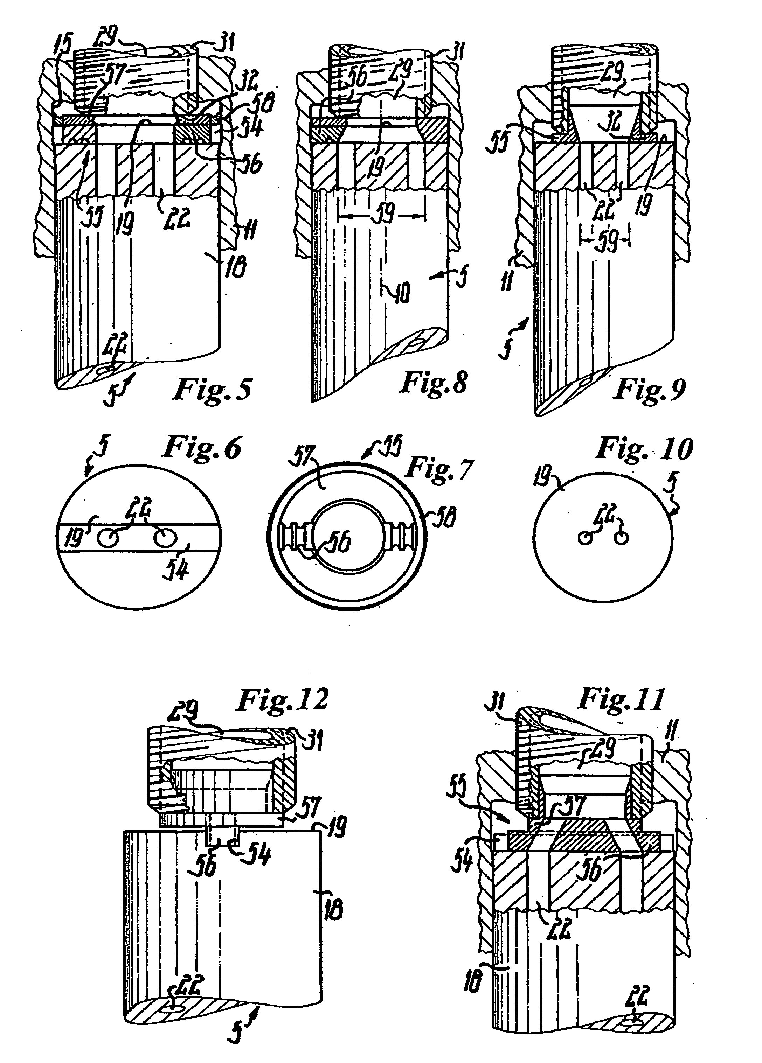

Gemäß den Figuren 1 bis 3 weist das hintere Schaftende 19 eine zentrische Vertiefung, wie einen stumpfwinkligen Spitzkonus, auf, von welcher die Kanäle 22 ausgehen. Stattdessen kann die Vertiefung auch eine Quernut gemäß den Figuren 5, 6, 8, 11 bis 14 und 18, 19 sein. Zwischen den Flächen 19, 32 ist eine Übergangs- oder Dichteinheit 55 vorgesehen, die ein- oder mehrteilig ausgebildet sein kann. Sie weist elastische, stegförmige Vorsprünge 56 auf, welche beiderseits der Kanäle 22 mit Querspannung abgedichtet in die Nut 54 eingreifen. An ihnen und der Endfläche 19 liegt mit Axialspannung eine ringförmige Dichtungsplatte 57 an, welche durch Anlage an der Fläche 32 mit dem Glied 31 verspannt ist. Eine Ringdichtung 58 verhindert, daß der Medienstrom in den Schlitz 54 oder die Bohrung 15 ausweicht.

Während die einander zugekehrten Flächen der Füllstücke 56 gemäß Fig. 5 parallel zur Achse 10 liegen, sind sie gemäß Fig. 8 wegen des äußeren Abstandes 59 der Kanäle 22 schräg. Links und rechts in Fig. 8 sind Modifikationen gezeigt. Rechts in Fig. 8 greifen die stirnseitigen Vorsprünge dicht in den Schlitz 54 ein, sind formsteif und können z.B. durch Klebung fest mit dem Werkzeug 5 verbunden sein.

Die Figuren 9 und 10 zeigen weitere Ausgestaltungen. Werkzeuge, wie Stufenbohrer, können wesentlich mehr als zwei, z.B. bis zu zwanzig Kanäle 22 oder Auslässe 23 aufweisen.

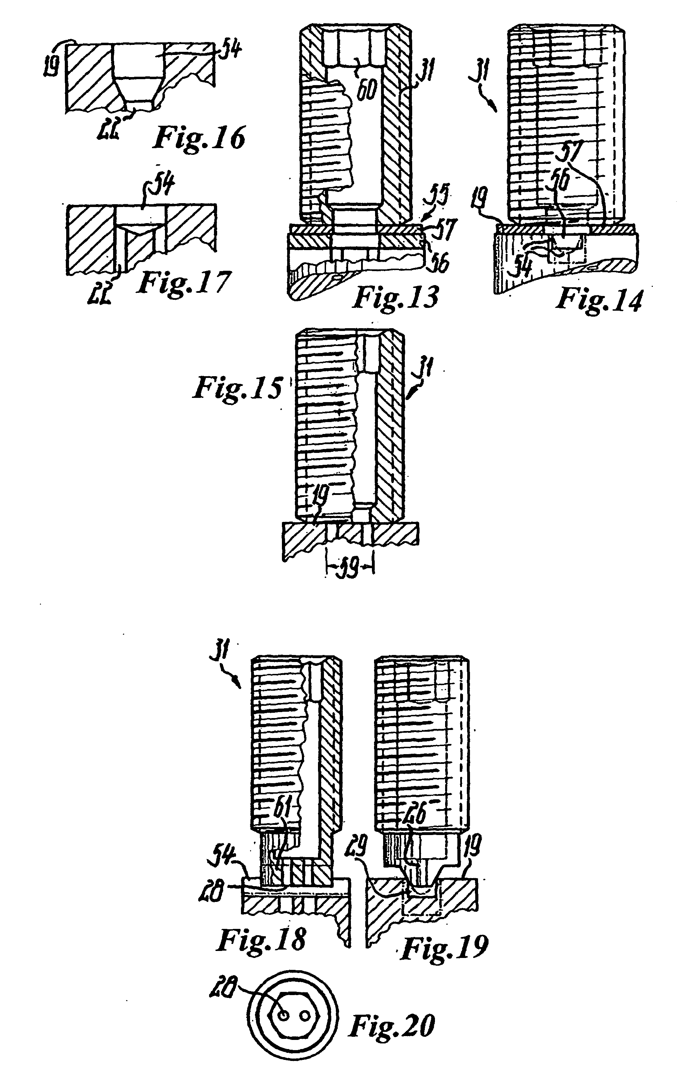

Fig. 13 zeigt ein Glied 60, wie einen Innensechskant, für den formschlüssigen Eingriff eines Werkzeuges am hinteren Ende, welches durch die Vertiefung 16 zugänglich ist und entweder gemäß Fig. 13 am hinteren Ende der Hülse 31 oder gemäß Fig. 3 hinter dem Düsenauslaß 28 im Bereich des Einlasses 27 liegt.

Gemäß den Figuren 18 bis 20 ist die Kammer in der Hülse 31 am vorderen Ende mit einem steg- oder keilförmigen Boden 61 verschlossen, welcher für jeden Kanal 22 mit einem Düsenkanal durchsetzt ist. Diese Düsenkanäle bilden eine weitere Zerstäubungsstufe. Die Vertiefung 54 kann aber auch die Kammer 29 bilden, während die Hülse 31 die Kanäle 26 und die Auslässe 28 bildet.

## Patentansprüche

1. Zuführung für Medien an ein Werkzeug (5), mit einem Futter (4), das zur Halterung des Werkzeuges (5) und zur Befestigung an einer Arbeitsspindel (3) einen Futterkörper (11) aufweist, sowie mit einer teilweise bis vollständig an dem Futter (4) vorgesehenen Leiteinrichtung (20) für das Medium, die eine Kanalisierung mit mindestens einem Kanal (21) umfasst, welcher an einem Endkanal (22) einen Medienauslass (23) aufweist, eine Strömungsrichtung (24) bestimmt und insbesondere mit einem Anschlussstück (35) an einen Kanal (38, 44) der Arbeitsspindel (3) anzuschließen ist, wobei die Leiteinrichtung (20) stromaufwärts des Medienauslasses (23) eine Düse (25) mit einem Düsenauslass (28) umfasst, **dadurch gekennzeichnet, dass** die Leiteinrichtung einen gesonderten Kanal (38) für das Medium und eine davon gesonderte Leitung (45) für ein Zweitmedium aufweist, die in eine Vorkammer (41) einer Vorzerstäubung (40) des Mediums mit dem Zweitmedium münden, an die die Düse (25) anschließt, die in eine gegenüber ihr erweiterte Düsenkammer (29) mündet, die stromaufwärts unmittelbar an den Endkanal (22) anschließt und die unmittelbar vom Werkzeug (5) begrenzt ist.

2. Zuführung nach Anspruch 1, **dadurch gekennzeichnet, dass** der Endkanal (22) enger ist als die Düsenkammer (29).

3. Zuführung nach Anspruch 1 oder 2, **dadurch gekennzeichnet, daß** die Düse (25) einen vom Futter (4) und vom Werkzeug (5) gesonderten Düsenkörper (30) umfaßt, daß insbesondere die Düse (25) von einem Leitmantel (31) umgeben und relativ zu diesem verstellbar ist, und daß vorzugsweise die Düse (25) am Außenumfang im wesentlichen dicht in den Leitmantel (31) eingreift.

4. Zuführung nach Anspruch 3, **dadurch gekennzeichnet, daß** der Leitmantel (31) die Düsenkammer (29) begrenzt, daß insbesondere der Leitmantel (31) wenigstens teilweise durch einen vom Futterkörper (11) gesonderten Leitkörper gebildet ist, und daß vorzugsweise der Futterkörper (11) einteilig das Werkzeug (5) umgibt sowie wenigstens teilweise die Düsenkammer (29) begrenzt.

5. Zuführung nach einem der vorhergehenden Ansprüche, **dadurch gekennzeichnet, daß** die Düse (25) in Strömungsrichtung (24) frei ausragt, daß insbesondere die Düse (25) mit Abstand vom Innenumfang des Leitmantels (31) umgeben ist, und daß vorzugsweise der Leitmantel (31) und/oder die Düsenkammer (29) mit einem gegenüber der Düse (25) weiteren Durchlaßquerschnitt dicht an den Endkanal (22) anschließt, der im wesentlichen vom hinteren Ende (19) des Werkzeuges (5) ausgeht bzw. begrenzt ist.

6. Zuführung nach einem der vorhergehenden Ansprüche, **dadurch gekennzeichnet, daß** die Düse (25) einen Düsenkanal (26) aufweist, dessen stromabwärtiges Ende den Düsenauslaß (28) bildet und der stromaufwärts des Düsenauslasses (28) einen verengten Düseneinlaß (27) bildet, daß insbesondere der Düseneinlaß (27) in Strömungsrichtung (24) degressiv verengt ist, und daß vorzugsweise der Düsenkanal (26) ab dem Düseneinlaß (27) bis zum Düsenauslaß (28) im wesentlichen konstante Durchlaßquerschnitte hat.

7. Zuführung nach einem der vorhergehenden Ansprüche, **dadurch gekennzeichnet, daß** die Düsenkammer (29) der Düse (25) vom vorderen Ende des Futters (4) einen mittleren Abstand hat, der höchstens einem Drittel bis der Hälfte der Länge des Futterkörpers (11) entspricht, daß insbesondere der Futterkörper (11) zum axial formschlüssige Eingriff eines Gegengliedes ein äußeres Bingriffsglied (13) aufweist und der Düsenauslaß (28) bzw. die Düsenkammer (29) axial stromabwärts des Eingriffsgliedes (13) liegt, und daß vorzugsweise der Futterkörper (11) im Bereich des Düsenauslasses (28) eine größere Außenweite als stromabwärts davon hat.

8. Zuführung nach einem der vorhergehenden Ansprüche, **dadurch gekennzeichnet, daß** ein an das hintere Ende (19) den Werkzeuges (5) im wesentlichen anliegend anschließender Kanalkörper (31), wie der Leitmantel, der Düsenkörper (30) o. dgl., axial gegenüber dem Futterkörper (11) verstellbar ist, daß insbesondere der Kanalkörper (31) einen Längsanschlag (32) für das Werkzeug (5) bildet, und daß vorzugsweise der Kanalkörper (31) mit einem Stellglied (33), wie einem Gewinde, einem Exzenter, einer Feder (49) o. dgl. gegen das gehalterte Werkzeug (5) abstellbar ist.

9. Zuführung nach einem der vorhergehenden Anspruche, **dadurch gekennzeichnet, dass** die Düse (25) eine Zerstäuberdüse ist, dass insbesondere der Düsenauslass (28) mit der vom Kanal (21) gesonderten Leitung (45) für gasförmiges Zweitmedium einer Gaszuführung verbunden ist, deren Gasauslass (46') stromabwärts höchstens bis an den Düsenauslaß (28) reicht, und daß vorzugsweise die Düse (25) vom Gasauslaß (46) umgeben ist.

10. Zuführung nach einem der vorhergehenden Ansprüche, **dadurch gekennzeichnet, daß** die Vor-Zerstäubung (40) ein an der Arbeitsspindel (3) frei ausragendes Rohr (38) mit einem Rohrende aufweist, das als Abgabedüse (39) für das Medium von der Gasleitung (45) umgeben ist und in die erweiterte Vorkammer (41) mündet, welche bis an die Düse (25) reicht, und daß vorzugsweise die Düsenkammer (29) enger und/oder kürzer als die Vorkammer (41) ist.

11. Zuführung nach einem der vorhergehenden Ansprüche, **dadurch gekennzeichnet, daß** der Futterkörper (11) am hinteren Ende eine Vertiefung (16) aufweist, in der vollständig versenkt das nach hinten frei vorstehende Anschlußstück (35) der Kanalisierung liegt, daß insbesondere das Anschlußstück (35) die Vorkammer (41) begrenzt, quer zu seiner Achse (10) elastisch nachgiebig gelagert ist und/oder die Düse (25) trägt, und daß vorzugsweise mindestens ein Förderabschnitt des Kanales (21) in Strömungsrichtung (24) bis zu einem Anschlußabschnitt (22) erweitert ist, der enger als der Förderabschnitt (29) ist.

12. Zuführung nach einem der vorhergehenden Ansprüche, **dadurch gekennzeichnet, daß** Leitmittel (70) für einen die Leiteinrichtung (20) und/oder das Werkzeug (5) im wesentlichen umgehenden sowie neben dem Werkzeug (5) aus dem Futterkörper (11) austretenden Fluidstrom vorgesehen sind, daß insbesondere die Leitmittel (70) einen Bypass-Kanal (66) aufweisen, der von der Gasleitung (45) gespeist und zwischen Hülsen (35, 42, 43) der Leiteinrichtung (20) begrenzt ist, und daß vorzugsweise die Leitmittel (70) eine Sperreinrichtung gegen Rückfluß des Mediums in der Leiteinrichtung (20) bilden.

## Claims

1. A medium fluid feeder includes a chuck (4) comprising for mounting the tool (5) and for securing to a mainspindle (3) a chuck body (11), as well as a medium guide means (20) provided at said chuck (4), said guide means incorporating a passageway including at least one passage (21) comprising at an end passage (22) an orifice (23) and defining a direction of flow (24), and more particularly comprising a connector (35) for connecting to a passage (38, 44) of said mainspindle (3), said guide means (20) comprising upstream of said orifice (23) a nozzle (25) including a nozzle outlet (28), **characterized in that** said guide means comprises a separate passage (38) for the medium and separate therefrom a duct (45) for a second medium porting into a prechamber (41) of a preatomizer (40) of said medium with said second medium, adjoined by said nozzle (25) porting in a nozzle chamber (29) widened as compared to the latter and which is directly adjoined upstream to said end passage (22) and is directly defined by said tool (5).

2. The feeder as set forth in claim 1, **characterized in that** said end passage (22) is narrower than said nozzle chamber (29).

3. The feeder as set forth in claim 1 or 2, **characterized in that** said nozzle (25) comprises a nozzle body (30) separate from said chuck (4) and said tool (5), more particularly said nozzle (25) being surrounded by a guide shell (31) and adjustable relative thereto and preferably said nozzle (25) substantially sealingly engaging said guide shell (31) outer circumference.

4. The feeder as set forth in claim 3, **characterized in that** said guide shell (31) defines said nozzle chamber (29), more particularly said guide shell (31) being formed at least in part by a guide body separate from said chuck body (11) and preferably said chuck body (11) surrounding said tool (5) integrally as well as defining said nozzle chamber (29) at least in part.

5. The feeder as set forth in any of the preceding claims, **characterized in that** said said nozzle (25) freely protrudes in said direction of flow (24), more particularly said nozzle (25) being surrounded by the inner circumference of said guide shell (31) spaced away therefrom and preferably said guide shell (31) and/or said nozzle chamber (29) sealingly contacting said end passage (22) by a porting cross-section wider than said nozzle (25), said end passage (22) emanating substantially from the rear end (19) of said tool (5) or is defined thereby.

6. The feeder as set forth in any of the preceding claims, **characterized in that** said nozzle (25) comprises a nozzle passage (26), the downstream end of which forms said nozzle outlet (28) and which upstream of said nozzle outlet (28) forms a downstream constricted nozzle inlet (27), more particularly said nozzle inlet (27) being degressively constricted in said direction of flow (24) and preferably said nozzle passage (26) having substantially constant communicating cross-sections as of said nozzle inlet (27) to said nozzle outlet (28).

7. The feeder as set forth in any of the preceding claims, **characterized in that** said nozzle chamber (29) of said nozzle (25) has a mean spacing from the front end of said chuck (4) corresponding to maximally a third to half of the length of said chuck body (11), more particularly said chuck body (11) comprising an outer engaging member (13) for axially positively engaging a companion means and said nozzle outlet (28) or nozzle chamber (29) being located axially downstream of said engaging member (13) and preferably said chuck body (11) having in the region of said nozzle outlet (28) a larger outer diameter than downstream thereof.

8. The feeder as set forth in any of the preceding claims, **characterized in that** a passage body (31) such as said guide shell, said nozzle body (30) or the like contacting said rear end (19) of said tool (5) substantially in contact therewith is axially adjustable relative to said chuck body (11), more particularly said passage body (31) forming a longitudinal stop (32) for said tool (5) and preferably said passage body (31) being advanceable in the direction of said mounted tool (5) by means of an actuator (33) such as a thread, a cam, a spring (49) or the like.

9. The feeder as set forth in any of the preceding claims, **characterized in that** said nozzle (25) is an atomizer nozzle, more particularly said nozzle outlet (28) being connected to a duct (45) for the gaseous second medium of a gas supply separate from said passage (21), the gas outlet (46) of which extends downstream maximally up to said nozzle outlet (28) and preferably said nozzle (25) being surrounded by said gas outlet (46).

10. The feeder as set forth in any of the preceding claims, **characterized in that** said pre-atomizer (40) comprises a tube (38) freely protruding from said mainspindle (3) by one tube end which as the discharge nozzle (39) for said fluid is surrounded by said gas duct (45) and ports into a flared prechamber (41) extending up to said nozzle (25) and preferably said nozzle chamber (29) being narrower and/or shorter than said prechamber (41).

11. The feeder as set forth in any of the preceding claims, **characterized in that** said said chuck body (11) comprises at the rear end a recess (16) in which a connector (35) freely protruding to the rear of said passageway is located totally recessed, more particularly said connector (35) defining said prechamber (41), it being pliantly mounted transversely to its longitudinal centerline (10) and/or mounting said nozzle (25), and preferably at least one delivery section of said passage (21) being widened in said direction of flow (24) up to a connecting section (22) which is narrower than said delivery section (29).

12. The feeder as set forth in any of the preceding claims, **characterized in that** guide means (70) are provided for a fluid flow substantially surrounding said guide means (20) and/or said tool (5) as well as emerging along said said tool (5) from said chuck body (11), more particularly said guide means (70) comprising a bypass passage (66) fed from said gas duct (45) and defined between sleeves (35, 42, 43) of said guide means (20) and preferably said guide means (70) forming a shut-off means to prevent backflow of the medium in said guide means (20).

## Revendications

1. Conduite d'amenée pour substances à un outil (5), avec un mandrin de serrage (4), qui présente un corps de mandrin (11) pour le serrage de l'outil (5) et pour la fixation sur un arbre moteur (3), ainsi qu'avec un moyen de guidage (20) pour la substance, qui est prévu en partie jusqu'à en entier sur le mandrin de serrage (4) et qui comprend une canalisation avec au moins un conduit (21), lequel présente une sortie de substances (23) dans un conduit terminal (22), lequel définit une direction d'écoulement (24) et lequel est à raccorder notamment au moyen d'une pièce de raccordement (35) à un conduit (38, 44) de l'arbre moteur (3), le moyen de guidage (20) comprenant en amont de la sortie de substances (23) une buse (25) avec une sortie de buse (28), **caractérisée en ce que** le moyen de guidage présente un conduit (38) spécialement pour la substance et un conduit (45) distinct du premier pour une substance secondaire, qui débouchent dans une préchambre (41) d'un organe de prénébulisation (40) de la substance au moyen de la substance secondaire, auquel fait suite la buse (25), qui débouche dans une chambre de buse (29) plus large par rapport à elle, cette dernière faisant suite en amont directement à un conduit terminal (22) et étant délimitée directement par l'outil (5).

2. Conduite d'amenée d'après la revendication 1, **caractérisée en ce que** le conduit terminal (22) est plus étroit que la chambre de buse (29).

3. Conduite d'amenée d'après la revendication 1 ou 2, **caractérisée en ce que** la buse (25) comprend un corps de buse (30) distinct du mandrin de serrage (4) et de l'outil (5), **en ce que** notamment la buse (25) est entourée d'une enveloppe de guidage (31) et qu'elle est ajustable par rapport à celle-ci, et **en ce que** de préférence la buse (25) s'engage de manière étanche dans l'enveloppe de guidage (31) au périmètre extérieur.

4. Conduite d'amenée d'après la revendication 3, **caractérisée en ce que** l'enveloppe de guidage (31) délimite la chambre de buse (29), **en ce que** notamment l'enveloppe de guidage (31) est constituée au moins en partie d'un corps de guidage séparé du corps de mandrin (11), et **en ce que** de préférence le corps de mandrin (11) entoure en une seule pièce l'outil (5) ainsi qu'il délimite au moins en partie la chambre de buse (29).

5. Conduite d'amenée d'après une des revendications précédentes, **caractérisée en ce que** la buse (25) saille librement en direction d'écoulement (24), **en ce que** notamment la buse (25) est entourée à une certaine distance par le périmètre intérieur de l'enveloppe de guidage (31), et **en ce que** de préférence l'enveloppe de guidage (31) et/ou la chambre de buse (29) font suite de manière étanche au conduit terminal (22) avec une section transversale plus grande par rapport à la buse (25), le conduit terminal provenant de ou encore étant délimité essentiellement par l'extrémité postérieure (19) de l'outil (5).

6. Conduite d'amenée d'après une des revendications précédentes, **caractérisée en ce que** la buse (25) présente un conduit de buse (26) dont l'extrémité en aval forme la sortie de buse (28) et qui forme en amont de la sortie de buse (28) un accès de buse (27) resserré, **en ce que** notamment l'accès de buse (27) est resserré de manière dégressive en direction d'écoulement (24), et **en ce que** de préférence le conduit de buse (26) présente essentiellement une section transversale essentiellement constante à partir de l'accès de buse (27) jusqu'à la sortie de buse (28).

7. Conduite d'amenée d'après une des revendications précédentes, **caractérisée en ce que** la chambre de buse (29) de la buse (25) présente un écart moyen de l'extrémité antérieure du mandrin de serrage (4), qui correspond au plus à un tiers jusqu'à la moitié de la longueur du corps de mandrin (11) ; **en ce que** notamment le corps de mandrin (11) présente un élément de prise (13) pour la prise à engagement positif en direction axiale d'un contre-élément et que la sortie de buse (28) ou encore la chambre de buse (29) se trouve axialement en aval de l'élément de prise (13), et **en ce que** de préférence le corps de mandrin (11) présente une ampleur extérieure plus grande dans le domaine de la sortie de buse (28) qu'en aval de cet endroit.

8. Conduite d'amenée d'après une des revendications précédentes, **caractérisée en ce qu'**un corps de conduit (31), faisant suite de manière essentiellement contiguë à l'extrémité postérieure (19) de l'outil (5), tel qu'une enveloppe de guidage, tel que le corps de buse (30) ou similaires est ajustable axialement par rapport au corps de mandrin (11), **en ce que** notamment le corps de conduit (31) forme un arrêt longitudinal (32) pour l'outil (5), et **en ce que** de préférence le corps de conduit (31) peut être placé contre l'outil (5) au moyen d'un vérin (33), tel qu'un filet, un excentrique, un ressort (49) ou similaires.

9. Conduite d'amenée d'après une des revendications précédentes, **caractérisée en ce que** la buse (25) est une buse de nébulisation, **en ce que** notamment la sortie de buse (28) est raccordée au conduit (45), séparé du conduit (21), pour une substance secondaire gazeuse d'une alimentation en gaz, dont la sortie de gaz (46) s'étend en aval au plus jusqu'à la sortie de buse (28) et **en ce que** de préférence la buse (25) est entourée par la sortie de gaz (46).

10. Conduite d'amenée d'après une des revendications précédentes, **caractérisée en ce que** le moyen de nébulisation préliminaire (40) présente un tuyau (38) librement saillant à l'arbre moteur (3), avec une extrémité de tuyau, qui est entourée en tant que buse d'émission (39) pour la substance par un conduit de gaz (45) et qui débouche dans la préchambre (41) élargie, qui s'étend jusqu'à la buse (25), et **en ce que** de préférence la chambre de buse (29) est plus étroite et/ou plus courte que la préchambre (41).

11. Conduite d'amenée d'après une des revendications précédentes, **caractérisée en ce que** le corps de mandrin (11) présente à l'extrémité postérieure un creux (16), dans lequel se trouve de manière entièrement noyée l'élément de raccordement (35) librement saillant en arrière de la canalisation, **en ce que** notamment l'élément de raccordement (35) délimite la préchambre (41), qu'il est logé de manière élastiquement souple transversalement par rapport à son axe (10) et/ou qu'il porte la buse (25), et **en ce que** de préférence au moins une section d'acheminement du conduit (21) est élargie en direction d'écoulement (24) jusqu'à une section de raccordement (22), qui est plus étroite que la section d'acheminement (29).

12. Conduite d'amenée d'après une des revendications précédentes, **caractérisée en ce que** des moyens de guidage (70) sont prévus pour un courant fluidique qui s'écoule essentiellement en entourant le dispositif de guidage (20) et/ou l'outil (5) ainsi qu'il sort du corps de mandrin (11) à côté de l'outil (5), **en ce que** notamment les moyens de guidage (70) présentent un conduit de dérivation (66), qui est alimenté par le conduit de gaz (45) et qui est délimité entre des douilles (35, 42, 43) du dispositif de guidage (20) et **en ce que** de préférence les moyens de guidage (70) forment un dispositif de verrouillage contre un refluement de la substance dans le dispositif de guidage (20).
